# EUROPÄISCHE PATENTSCHRIFT

(11) **EP 4 422 923 B1**
(45) Veröffentlichungstag und Bekanntmachung des Hinweises auf die Patenterteilung: **27.08.2025**
(21) Anmeldenummer: 22782467.9
(22) Anmeldetag: 07.09.2022
(51) Int. Cl.: B60Q 1/14, F21S 41/663, F21S 41/153, F21S 41/25, B60Q 1/08

(54) **SCHEINWERFERVORRICHTUNG EINES FAHRZEUGS UND VERFAHREN ZUM AUSLEUCHTEN EINES AUS EINEM ERSTEN PROJEKTIONSBEREICH UND AUS EINEM ZWEITEN PROJEKTIONSBEREICH ZUSAMMENGESETZTEN PROJEKTIONSFELDS**
HEADLAMP DEVICE OF A VEHICLE AND METHOD FOR ILLUMINATING A PROJECTION FIELD COMPOSED OF A FIRST PROJECTION REGION AND A SECOND PROJECTION REGION
DISPOSITIF DE PHARE D'UN VÉHICULE ET PROCÉDÉ POUR ÉCLAIRER UN CHAMP DE PROJECTION COMPOSÉ D'UNE PREMIÈRE RÉGION DE PROJECTION ET D'UNE SECONDE RÉGION DE PROJECTION

(30) Priorität: 27.10.2021 DE 102021212159
(43) Veröffentlichungstag der Anmeldung: 04.09.2024
(73) Patentinhaber: Stellantis Auto SAS, 78300 Poissy (FR)
(72) Erfinder: ROECKL, Philipp, 65428 Rüsselsheim am Main (DE); DELAPIERRE, Arnaud, 78490 LES MESNULS (FR)
(74) Vertreter: ESIP
(86) Internationale Anmeldenummer: PCT/EP2022/074835
(87) Internationale Veröffentlichungsnummer: WO 2023/072465

(56) Entgegenhaltungen:
- EP-A1- 3 670 262
- EP-A2- 3 018 007
- WO-A1-2016/074766
- WO-A1-2020/126990
- DE-A1- 102009 054 249
- DE-A1- 102011 002 335
- DE-A1- 102016 003 814
- DE-A1- 102016 006 815
- DE-A1- 102018 102 113
- DE-A1- 102020 129 546
- KR-B1- 101 929 736
- US-A1- 2016 368 414

## Beschreibung

Die vorliegende Offenbarung betrifft im Allgemeinen Scheinwerfervorrichtungen. Im Speziellen betrifft die vorliegende Offenbarung eine Scheinwerfervorrichtung eines Fahrzeugs und ein Verfahren zum Ausleuchten eines aus einem ersten Projektionsbereich und aus einem zweiten Projektionsbereich zusammengesetzten Projektionsfelds.

Es sind Scheinwerfervorrichtungen bekannt, welche in den Fahrzeugen eingesetzt werden, um insbesondere eine oder andere Fahrzeugscheinwerferfunktion, beispielsweise Fernlicht- Abblendlicht- oder sogenannte HD (High Definition) Funktion bereitzustellen. Bedingt durch die Montage- bzw. Justage-Toleranzen können Abweichungen in Strahlrichtungen bzw. Projektionsrichtungen zwischen unterschiedlichen Scheinwerfereinheiten eines Fahrzeugs auftreten, wodurch die Scheinwerferperformance beeinträchtigt werden kann. Dabei können auch geringfügige Fehlanpassungen zwischen einzelnen Scheinwerfereinheiten zum Teil störend auffallen, den Fahrzeugfahrer ablenken, und die Verkehrssicherheit gefährden.

Aus der DE 10 2011 002 335 A1 ist eine Scheinwerferanordnung für Kraftfahrzeuge mit einem rechten und einem linken Scheinwerfer und einem Steuergerät bekannt. Mit dem rechten Scheinwerfer ist eine erste Lichtverteilung und mit dem linken Scheinwerfer ist eine zweite Lichtverteilung erzeugbar, die durch Überlagerung eine Gesamtlichtverteilung ergeben. Die Gesamtlichtverteilung dient einer blendfreien Fernlichtverteilung mit einem dynamisch erzeugbaren Dunkelbereich zum Entblenden anderer Verkehrsteilnehmer.

Ferner betrifft die US 2016/0368414 A1 einen Scheinwerfer mit einer ersten Lichtquelle für ein Abblendlicht und einer Matrixlichtquelle für ein blendfreies Fernlicht.

Eine Aufgabe der Ausführungsformen der vorliegenden Offenbarung ist es, eine Scheinwerfervorrichtung eines Fahrzeugs und ein Verfahren bereitzustellen, um die negativen Folgen von Montage-Toleranzen von Scheinwerfereinheiten einer Scheinwerfervorrichtung zu mildern.

Zur Lösung dieser Aufgabe wird nach einem ersten Aspekt eine Scheinwerfervorrichtung eines Fahrzeugs zum Ausleuchten eines Abblendlichtprojektionsbereichs, eines Fernlichtprojektionsbereichs und HD- (High Definition) Projektionsfelds bereitgestellt, wobei das HD-Projektionsfeld aus einem ersten Projektionsbereich und aus einem zweiten Projektionsbereich zusammengesetzt ist. Die Scheinwerfervorrichtung umfasst eine erste steuerbare Scheinwerfereinheit eines linken Fahrzeugscheinwerfers zum Ausleuchten des ersten Projektionsbereichs mit veränderbarer räumlicher Beleuchtungsverteilung und eine zweite Scheinwerfereinheit einer rechten Fahrzeugscheinwerfers zum Ausleuchten des zweiten Projektionsbereichs mit veränderbarer räumlicher Beleuchtungsverteilung. Die Scheinwerfervorrichtung umfasst auch eine Steuereinheit zum Ansteuern der ersten Scheinwerfereinheit und der zweiten Scheinwerfereinheit.

Die Steuereinheit ist konfiguriert, die erste Scheinwerfereinheit und die zweite Scheinwerfereinheit derart anzusteuern, dass das HD-Projektionsfeld innerhalb des Abblendlichtprojektionsbereichs auf einer Fahrbahn innerhalb einer Fahrspur des Fahrzeugs liegt, und dass durch eine lokale Abdunkelung des ersten Projektionsbereichs und des zweiten Projektionsbereichs eine Dunkelzone in einem Grenzbereich zwischen dem ersten Projektionsbereich und dem zweiten Projektionsbereich erzeugt werden kann, die an einem dem Fahrzeug naheliegenden Rand des HD-Projektionsfeldes ausgebildet ist und sich über die beiden Projektionsbereiche erstreckt.

Die erste Scheinwerfereinheit und die zweite Scheinwerfereinheit können zum Ausleuchten des ersten bzw. des zweiten Projektionsbereichs jeweils eine durch die Steuereinheit steuerbare Lichtquelle, beispielsweise eine LED-Lichtquelle, sowie eine Scheinwerferoptik umfassen. Die Scheinwerfervorrichtung kann insbesondere so in dem Fahrzeug eingebaut sein, dass der ausgeleuchtete Projektionsbereich in Fahrtrichtung des Fahrzeugs liegt. Die erste Scheinwerfereinheit kann insbesondere auf der linken Hälfte des Fahrzeuges angebracht sein und die zweite Scheinwerfereinheit kann insbesondere auf der rechten Hälfte des Fahrzeugs angebracht sein. Die erste Scheinwerfereinheit und die zweite Scheinwerfereinheit können insbesondere zusammen mit anderen Scheinwerfereinheiten bzw. Scheinwerfermodulen jeweils an einem gemeinsamen Trägerrahmen montiert sein.

Der erste Projektionsbereich und der zweite Projektionsbereich können dicht nebeneinander, in einem Abstand voneinander liegen und/oder sich überlappen. Die Überlappung zwischen dem ersten und dem zweiten Projektionsbereich kann beispielsweise in einem Projektionswinkelbereich zwischen 5° und 10° liegen.

Die Scheinwerfervorrichtung kann grundsätzlich auch mehrere Scheinwerfereinheiten umfassen, so dass das HD-Projektionsfeld auch aus mehreren Projektionsbereichen zusammengesetzt sein kann, wobei sich insbesondere an den Grenzen zwischen einzelnen Projektionsbereichen Fehlanpassungen ergeben können. Die wenigstens eine Dunkelzone kann eine oder mehrere Dunkelzonen umfassen. Die Dunkelzonen werden von Scheinwerfereinheiten mit einer verminderten Helligkeit bzw. Beleuchtungsstärke gegenüber dem Rest des HD-Projektionsfeldes ausgeleuchtet. Durch die wenigstens eine Dunkelzone in dem Grenzbereich können etwaige erkennbare Fehlanpassungen zwischen dem ersten und dem zweiten Projektionsbereich ausgeblendet werden. Die Fehlanpassungen können sich beispielsweise durch eine ungenaue Positionierung und/oder Ausrichtung der Scheinwerfereinheiten ergeben. Auch eine ungenaue Helligkeitsabstimmung zwischen Scheinwerfereinheiten kann zu solchen Fehlanpassungen führen, die durch die Bildung der Dunkelzone in dem Grenzbereich zwischen dem ersten Projektionsbereich und dem zweiten Projektionsbereich kaschiert werden können. Bei der Bildung von Dunkelzonen kann die Helligkeit des HD-Projektionsfeldes außerhalb der lokal begrenzten Dunkelzonen unverändert bleiben. Die lokalen Dunkelzonen an den Stellen von Fehlanpassungen erlauben somit das Ausblenden der Fehlanpassungen, so dass die Fehlanpassungen den Fahrzeuginsassen nicht bzw. kaum auffallen, ohne dabei die Performance der Scheinwerfereinheiten merklich zu beeinträchtigen.

In dem Grenzbereich zwischen dem ersten Projektionsbereich und dem zweiten Projektionsbereich sind Fehlanpassungen durch die räumliche Nähe der beiden Projektionsbereiche für die Fahrzeuginsassen besonders auffällig. Aufgrund der Erstreckung der Dunkelzone über die beiden Projektionsbereiche können die auffälligen Fehlanpassungen im Grenzbereich besonders gut ausgeblendet werden.

Die Fehlanpassungen zwischen den Projektionsbereichen fallen an den Rändern der Projektionsbereiche, insbesondere an dem naheliegenden Rand, in der Regel besonders stark auf. Es kann, insbesondere bedingt durch Ungenauigkeiten bei der Justage bzw.

Ausrichtung der Scheinwerfereinheiten, zu einem stufenartigen Versatz von Projektionsbereichen an dem naheliegenden Rand kommen, was mit der Dunkelzone an dem naheliegenden Rand kaschiert werden kann.

Die Steuereinheit kann konfiguriert sein, die erste Scheinwerfereinheit und die zweite Scheinwerfereinheit derart anzusteuern, dass sich die wenigstens eine Dunkelzone zu dem naheliegenden Rand des HD-Projektionsfeldes hin aufweitet. Da die Fehlanpassungen an dem naheliegenden Rand besonders stark auffallen, können diese Auffälligkeiten durch die Aufweitung der Dunkelzone zu dem Rand hin besonders effizient, insbesondere mit minimaler Beeinträchtigung der Performance der Scheinwerfereinheiten, unterdrückt werden.

Die die Steuereinheit kann ferner konfiguriert sein, die erste Scheinwerfereinheit und die zweite Scheinwerfereinheit derart anzusteuern, dass sich die wenigstens eine Dunkelzone auf einen Projektionsraumwinkel von weniger als 1°, insbesondere weniger als 0,3° eingeschränkt wird. Durch die Fehljustage bedingten Winkelverschiebungen können unter 1°, insbesondre unter 0,3°, liegen. Mit der Einschränkung der Dunkelzone auf die entsprechenden Raumwinkel können Auffälligkeiten unterdrückt werden, ohne dabei die Scheinwerferperformance merklich zu beeinträchtigen.

Die Steuereinheit kann insbesondere konfiguriert sein, die erste Scheinwerfereinheit und die zweite Scheinwerfereinheit derart anzusteuern, dass die wenigstens eine Dunkelzone von einer entlang der Fahrtrichtung gerichteten Mittellinie seitlich versetzt wird. Die seitliche Versetzung der Dunkelzone kann insbesondere helfen, seitlich versetzte Fehlanpassungen, wie sie beispielsweise bei sich überlappenden Projektionsbereichen auftreten können, zu unterdrücken, ohne dabei die Dunkelzonen aufweiten zu müssen.

Die Steuereinheit kann ferner konfiguriert sein, die erste Scheinwerfereinheit und die zweite Scheinwerfereinheit derart anzusteuern, dass die wenigstens eine Dunkelzone unscharfe bzw. verschwommene Grenzen bzw. Konturen aufweist. Die Unschärfe an den Grenzen der Dunkelzone kann insbesondere durch Erzeugung eines abgeflachten Helligkeitsprofil über die Grenze der Dunkelzone erreicht werden. Eine Dunkelzone mit unscharfen bzw. verschwommenen Grenzen erscheint verwischt und fällt den Fahrzeuginsassen weniger auf. Die Unschärfe der Ränder der Dunkelzone erlaubt es, die Dunkelzone unauffällig in das HD-Projektionsfeld zu integrieren, Irritationen der Fahrzeuginsassen zu minimieren und trägt somit zur allgemeinen Verkehrssicherheit bei.

Die Steuereinheit kann konfiguriert sein, die erste Scheinwerfereinheit und die zweite Scheinwerfereinheit derart anzusteuern, dass die wenigstens eine Dunkelzone lokal unterschiedliche Unschärfe an den Grenzen aufweisen. Durch die lokalen Unterschiede in der Unschärfe der Dunkelzonengrenze können lokale Auffälligkeiten gezielt kaschiert werden. So kann die Unschärfe in der unmittelbaren Nähe einer störenden Fehlanpassung höher als in anderen Bereichen sein.

In einigen Ausführungsbeispielen ist die Steuereinheit ausgebildet, die erste Scheinwerfereinheit und die zweite Scheinwerfereinheit derart anzusteuern, dass die wenigstens eine Dunkelzone an Veränderungen in dem ersten Projektionsbereich und/oder in dem zweiten Projektionsbereich dynamisch angepasst wird. Insbesondere können sich die Projektionsbereiche im zeitlichen Verlauf beispielsweise in Form, Größe, Helligkeit, und/oder Textur ändern und sich auch der Fahr- und/oder Verkehrssituation anpassen. Die Änderung der Projektionsbereiche kann auch die Positionen und/oder Form der Fehlanpassungen zwischen den Projektionsbereichen ändern. Durch die dynamische Anpassung der Dunkelzonen kann insbesondere die Änderungen der Projektionsbereiche berücksichtigt werden, so dass die Fehlanpassungen trotz dynamischer Änderungen der Projektionsbereiche zuverlässig ausgeblendet werden können.

Insbesondere kann die Steuereinheit konfiguriert sein, die erste Scheinwerfereinheit und die zweite Scheinwerfereinheit derart anzusteuern, dass sich die wenigstens eine Dunkelzone an Veränderungen in dem ersten Projektionsbereich und/oder in dem zweiten Projektionsbereich in Abhängigkeit von einer aktuellen Fahrzeuggeschwindigkeit und/oder von einem aktuellen Kurvenradius dynamisch anpasst. Beispielsweise kann sich die Dunkelzone bei einer Kurvenfahrt so verformen, dass sie sich an gekrümmte Projektionsbereiche anpasst, und bei hohen Geschwindigkeiten an längsgezogene Projektionsbereiche anpasst. Somit kann die wenigstens eine Dunkelzone an die aktuelle Fahrsituation angepasst werden.

In einigen Ausführungsbeispielen ist die erste Scheinwerfereinheit und/oder die zweite Scheinwerfereinheit als eine HD (High-Definition) Scheinwerfereinheit zum Erzeugen einer HD-Projektion auf der Fahrbahn ausgebildet. Die HD-Scheinwerfereinheit kann wenigstens eine Lichtquelle in Form eines LED-Moduls mit einem LED-Pixel-Array ausgebildet sein. Die LED-Pixel-Arrays können insbesondere eine Vielzahl von einzeln und/oder Clusterweise ansteuerbaren LEDs zum Erzeugen einer hochaufgelösten Projektion umfassen. Die Ausbildung der Scheinwerfereinheit als HD-Scheinwerfereinheit erlaubt es, die Projektionsbereiche als HD-Projektionsbereiche präzise zu definieren und darin Verkehrszeichen bzw. Hilfsinformationen in Form von Texten und Symbolen mit einer hohen Auflösung zu projizieren. Fehlanpassungen zwischen zwei HD-Projektionsbereichen fallen aufgrund der präzisen Begrenzungen der Projektionsbereiche stärker auf. Die Ungenauigkeit der Ausrichtung der Scheinwerfereinheiten aufgrund der Toleranzen von kamerabasierten Kalibrierungssystemen kann zu einer Abweichung von 0,1 ° bis 0,5 ° zwischen den Projektionsbereichen führen, was insbesondere bei HD-Projektionsbereichen bereits störend auffallen kann. Die Ansteuerbarkeit der LED-Pixel-Arrays erlaubt es, die Dunkelzone durch Einzel- und/oder Cluster-Weise Ansteuerung der LEDs auf einfache Weise zu formen.

Nach einem zweiten Aspekt wird ein Verfahren zum Ausleuchten eines aus einem ersten Projektionsbereich und aus einem zweiten Projektionsbereich zusammengesetzten HD-(High Definition) Projektionsfelds mit einer Scheinwerfervorrichtung eines Fahrzeugs bereitgestellt. Die Scheinwerfervorrichtung kann insbesondere gemäß dem ersten Aspekt ausgebildet sein und weist eine erste Scheinwerfereinheit eines linken Fahrzeugscheinwerfers zum Ausleuchten des ersten Projektionsbereichs mit veränderbarer räumlicher Beleuchtungsverteilung und eine zweite Scheinwerfereinheit eines rechten Fahrzeugscheinwerfers zum Ausleuchten des zweiten Projektionsbereichs mit veränderbarer räumlicher Beleuchtungsverteilung.

Gemäß dem Verfahren wird die erste Scheinwerfereinheit angesteuert, den ersten Projektionsbereich auszuleuchten und die zweite Scheinwerfereinheit (21) wird angesteuert, den zweiten Projektionsbereichs auszuleuchten, so dass das HD-Projektionsfeld innerhalb eines Abblendprojektionsbereichs auf einer Fahrbahn innerhalb einer Fahrspur des Fahrzeugs liegt.

Die erste Scheinwerfereinheit und die zweite Scheinwerfereinheit wird ferner angesteuert, dass durch eine lokale Abdunkelung des ersten Projektionsbereichs und des zweiten Projektionsbereichs wenigstens eine Dunkelzone in einem Grenzbereich zwischen dem ersten Projektionsbereich und dem zweiten Projektionsbereich erzeugt wird. Die Dunkelzone ist an einem dem Fahrzeug naheliegenden Rand des HD-Projektionsfeldes ausgebildet und erstreckt sich über die beiden Projektionsbereiche.

Durch die Bildung der lokalen Dunkelzonen können Fehlanpassungen zwischen dem ersten Projektionsbereich und dem zweiten Projektionsbereich gezielt kaschiert werden, so dass die Fehlanpassungen nicht bzw. kaum auffallen.

Aufgrund der Erstreckung der Dunkelzone über die beiden Projektionsbereiche können die auffälligen Fehlanpassungen im Grenzbereich besonders gut ausgeblendet werden.

Mir der Dunkelzone an dem naheliegenden Rand des HD-Projektionsfeldes können insbesondere stufenartige Versetzungen an dem naheliegenden Rand besonders gut kaschiert werden.

In einigen Ausführungsbeispielen wird die wenigstens eine Dunkelzone an Veränderungen in dem ersten Projektionsbereich und/oder dem zweiten Projektionsbereich dynamisch angepasst. Durch die dynamische Anpassung der Dunkelzonen kann insbesondere die Änderungen der Projektionsbereiche berücksichtigt werden, so dass die Fehlanpassungen trotz dynamischer Änderungen der Projektionsbereiche zuverlässig ausgeblendet werden können.

Nach einem dritten Aspekt wird ein Fahrzeug bereitgestellt, wobei das Fahrzeug eine Scheinwerfervorrichtung gemäß dem ersten Aspekt im eingebauten Zustand aufweist. Aufgrund der Ausblendung der Fehlanpassungen zwischen dem ersten und dem zweiten Projektionsbereiche, bietet das Fahrzeug verbesserte Scheinwerferfunktionalität und erhöhte Sicherheit.

Die Erfindung wird nun anhand der beigefügten Figuren näher erläutert. Für gleiche oder gleichwirkende Teile werden in den Figuren gleiche Bezugszeichen verwendet.
- Fig. 1: zeigt schematisch ein Fahrzeug mit einer Scheinwerfervorrichtung zum Ausleuchten eines aus einem ersten Projektionsbereich und aus einem zweiten Projektionsbereich zusammengesetzten Projektionsfelds,
- Fig. 2: zeigt schematisch ein Fahrzeug mit einer Scheinwerfervorrichtung zum Ausleuchten eines aus einem ersten Projektionsbereich und aus einem zweiten Projektionsbereich zusammengesetzten Projektionsfelds gemäß einem Ausführungsbeispiel, und
- Fig. 3: zeigt ein schematisches Schaltbild der Scheinwerfervorrichtung gemäß einem Ausführungsbeispiel.

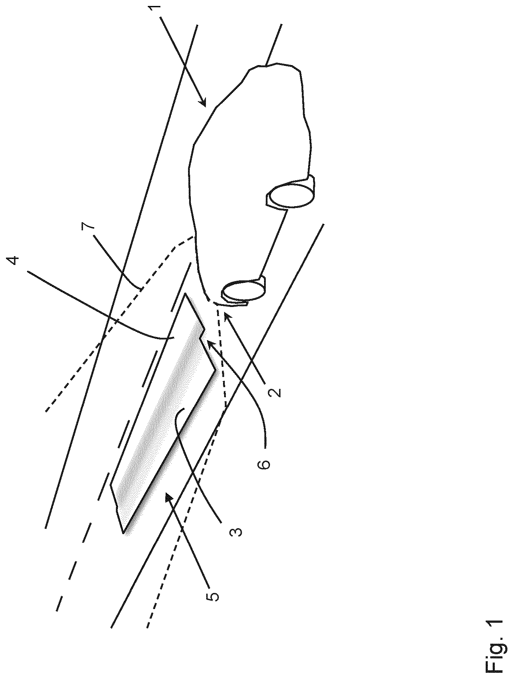

Fig. 1 zeigt schematisch ein Fahrzeug 1 mit einer Scheinwerfervorrichtung 2 zum Ausleuchten eines aus einem ersten Projektionsbereich 3 und aus einem zweiten Projektionsbereich 5 zusammengesetzten Projektionsfelds 5. Das Fahrzeug 1 der Fig. weist insbesondere eine Scheinwerfervorrichtung 2 mit einer ersten Scheinwerfereinheit 20 (nicht gezeigt) zum Ausleuchten eines ersten Projektionsbereichs 3 und eine zweite Scheinwerfereinheit 21 (nicht gezeigt) zum Ausleuchten eines zweiten Projektionsbereichs 4 auf. Das Fahrzeug 1 weist ferner eine Steuereinheit 30 (nicht gezeigt) zum Ansteuern der ersten Scheinwerfereinheit 20 und der zweiten Scheinwerfereinheit 21 auf.

Der erste Projektionsbereich 3 und der zweite Projektionsbereich 4 zusammen bilden das Projektionsfeld 5 bzw. HD-Projektionsfeld. Das Projektionsfeld 5 liegt innerhalb des Projektionsbereichs des Abblendlichts 7 (dargestellt durch gestrichelte Linie). Das Projektionsfeld 5 weist eine stufenförmige Versetzung 6 an einem dem Fahrzeug naheliegenden Rand des Projektionsfeldes. Die stufenförmige Versetzung 6 ist auf eine Fehlanpassung zwischen dem ersten Projektionsbereich 3 und dem zweiten Projektionsbereich 4 bedingt durch Montage- bzw. Justage-Toleranzen der Scheinwerfereinheiten 20 und 21 zurückzuführen.

In einigen Ausführungen können die Scheinwerfereinheiten 20 und 21 und die Steuereinheit 30 dazu ausgebildet sein, dass sich die Textur, die Form und die Größe der Projektionsbereichen 3 und 4 in Abhängigkeit von einer aktuellen Fahrsituation ändern kann. insbesondere können sich die Projektionsbereiche 3 und 4 bei einer Kurvenfahrt sich dem Kurvenradius entsprechend verformen. Dabei können die Projektionsbereiche 3 und 4 derart texturiert sein, dass sich im Grenzbereich zwischen dem ersten Projektionsbereich 3 und in dem zweiten Projektionsbereich 4 ein Streifen mit abgesetzter Helligkeit entlang der Fahrkurve ergibt.

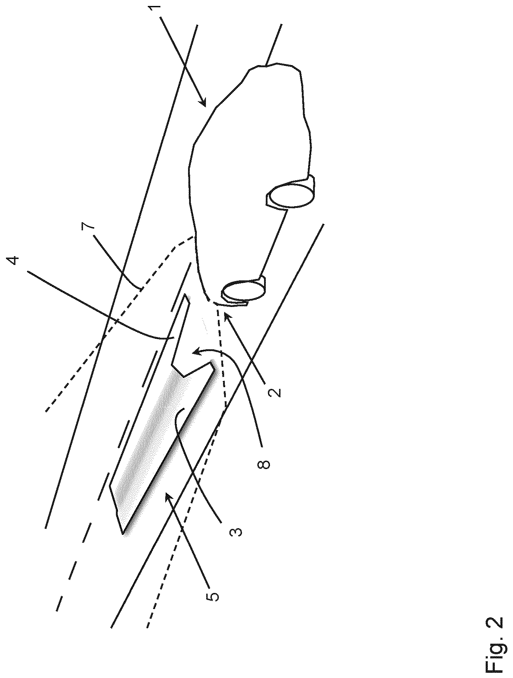

Fig. 2 zeigt schematisch ein Fahrzeug mit einer Scheinwerfervorrichtung zum Ausleuchten eines aus einem ersten Projektionsbereich und aus einem zweiten Projektionsbereich zusammengesetzten Projektionsfelds gemäß einem Ausführungsbeispiel. Fig. 2 entspricht im Wesentlichen der Fig. 1, wobei das Projektionsfeld 5 in dem Grenzbereich zwischen dem ersten Projektionsbereich 3 und dem zweiten Projektionsbereich 4 eine Dunkelzone 8 aufweist. Die Dunkelzone 8 ist an einem dem Fahrzeug naheliegenden Rand des Projektionsfeldes 5 ausgebildet und erstreckt sich über die beiden Projektionsbereiche 3 und 4.

Die Dunkelzone 8 kann durch eine entsprechende Ansteuerung der ersten Scheinwerfereinheit und der zweiten Scheinwerfereinheit gebildet werden, wenn insbesondere die für den Bereich der Dunkelzone 8 zuständige LEDs in der ersten Scheinwerfereinheit und in der zweiten Scheinwerfereinheit ausgeschaltet bzw. heruntergedimmt werden. In der Fig. 2 ist die stufenförmige Versetzung zwischen dem ersten Projektionsbereich 3 und dem zweiten Projektionsbereich 4 nicht gezeigt, da sie durch die Dunkelzone 8 kaschiert wird. Stattdessen ist eine durch die Dunkelzone 8 geformte spitz zulaufende Einbuchtung in dem Projektionsfeld 5 zu sehen.

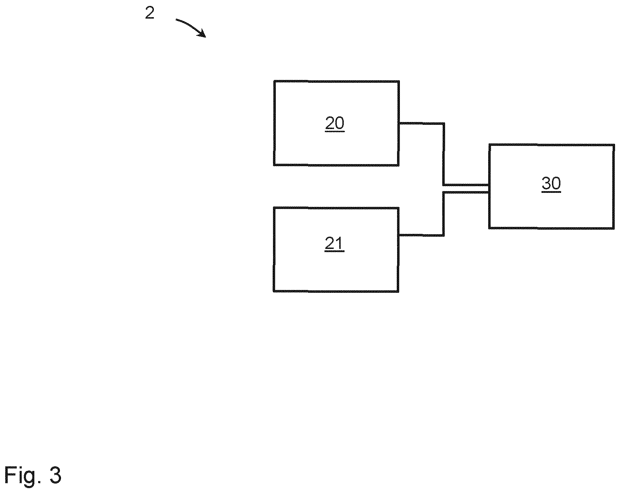

Fig. 3 zeigt ein schematisches Schaltbild der Scheinwerfervorrichtung gemäß einem Ausführungsbeispiel. Die Scheinwerfervorrichtung 2 umfasst eine erste Scheinwerfereinheit 20 und eine zweite Scheinwerfereinheit 21. Die erste Scheinwerfereinheit 20 und die zweite Scheinwerfereinheit 21 sind jeweils als steuerbare Scheinwerfereinheiten zum Ausleuchten eines Projektionsbereichs 3, 4 mit veränderbarer räumlicher Beleuchtungsverteilung ausgebildet. Die Scheinwerfervorrichtung 2 umfasst ferner eine Steuereinheit 30, welche insbesondere einen Prozessor (nicht gezeigt) und eine Speichereinheit (nicht gezeigt) aufweist. Die Speichereinheit kann insbesondere maschinenlesbare Anweisungen für den Prozessor zum Ansteuern der ersten Scheinwerfereinheit 20 und der zweiten Scheinwerfereinheit 21 umfassen. Insbesondere kann die Speichereinheit der Steuereinheit 30 Anweisungen für den Prozessor zum Ansteuern der ersten Scheinwerfereinheit und der zweiten Scheinwerfereinheit enthalten, so dass durch eine lokale Abdunkelung des ersten Projektionsbereichs 3 und/oder des zweiten Projektionsbereichs 3 wenigstens eine Dunkelzone 8 in einem Grenzbereich zwischen dem ersten Projektionsbereich 3 und dem zweiten Projektionsbereich 4 erzeugt werden kann.

Die erste Scheinwerfereinheit 20 und die zweite Scheinwerfereinheit 21 sind als LED-Matrix-Scheinwerfereinheiten bzw. HD- (High Definition) Einheiten zum Erzeugen jeweils einer HD-Projektion in dem ersten Projektionsbereich 3 und in dem zweiten Projektionsbereich 4 ausgebildet. Die LED-Matrix-Scheinwerfereinheiten weisen jeweils eine Vielzahl von matrixartig angeordneten LEDs. Beispielsweise können die Scheinwerfereinheiten 20 und 21 LED-Module mit 20000 oder mehr LEDs aufweisen, welche dazu ausgebildet einzeln und/oder clusterweise angesteuert zu werden, um eine HD-Projektion mit veränderbarer räumlicher Beleuchtungsverteilung auf der Fahrbahn zu erzeugen. Die erste Scheinwerfereinheit 20 und die zweite Scheinwerfereinheit 21 können insbesondere als Teil eines linken bzw. eines rechten Scheinwerfers des Fahrzeugs 1 ausgebildet sein.

Die Dunkelzone 8 kann in unterschiedlichen Ausführungen unterschiedliche Form aufweisen. Insbesondere kann die Dunkelzone 8 im Wesentlichen glockenförmig bzw. gaußförmig, kreisförmig, dreieckig und/oder rechteckig ausgebildet sein. In einigen Ausführungsform kann die Form der Dunkelzone 8 nützliche Informationen für den Fahrzeugfahrer und/oder Designmerkmale als Hinweis auf den Fahrzeughersteller enthalten.

In einigen Ausführungen kann die Dunkelzone 8 unscharfe bzw. verschwommene Grenzen aufweisen. Durch die Unschärfe der Grenzen der Dunkelzone 8, insbesondere durch einen graduellen Hell-Dunkel-Übergang über die Grenzen der Dunkelzone, können etwaige Fehlanpassungen zwischen dem ersten und dem zweiten Projektionsbereich besonders gut kaschiert werden.

Die Dunkelzone 8 kann ferner eine variable Form aufweisen. Insbesondere kann die Steuereinheit dazu ausgebildet sein, die erste Scheinwerfereinheit und die zweite Scheinwerfereinheit derart anzusteuern, dass die Dunkelzone an Veränderungen in dem ersten Projektionsbereich und/oder dem zweiten Projektionsbereich dynamisch angepasst wird. Beispielsweise kann sich die Dunkelzone 8 bei einer Kurvenfahrt so verformen, dass sie sich an gekrümmte Projektionsbereiche 3 und 4 und bei hohen Geschwindigkeiten an längsgezogene Projektionsbereiche 3 und 4 anpasst. Somit kann die eine Dunkelzone 8 der aktuellen Fahrsituation angepasst werden, so dass auch bei geänderten Konfigurationen der Projektionsbereiche nicht oder kaum auffällt.

Die Dunkelzone 8 kann insbesondere auf den mittleren Bereich des Projektionsfelds 5 beschränkt sein. Durch die Beschränkung der Dunkelzone 8 auf den mittleren Bereich des Projektionsfelds 5 kann insbesondere sichergestellt werden, dass die Ausleuchtung der linken und der rechten Seitenränder des Projektionsfelds 5, welche als Orientierungshilfe für den Fahrer dienen können, nicht beeinträchtigt wird.

Die Dunkelzone 8 kann auch seitlich versetzt ausgebildet sein. Die seitliche Versetzung der Dunkelzone kann insbesondere helfen, seitlich versetzte Fehlanpassungen, wie sie beispielsweise bei sich überlappenden Projektionsbereichen auftreten können, zu unterdrücken, ohne dabei die Dunkelzonen über Gebühr bzw. über das notwendige Maß hinaus aufweiten zu müssen. Beispielsweise kann mit einer um einen Projektionswinkel von etwa 5° seitlich versetzten Dunkelzone die stufenförmige Versetzung zwischen den Projektionsbereichen 3 und 4 bei einer seitlichen Überlappung der beiden Projektionsbereiche von etwa 10° effizient unterdrückt werden.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der vorliegenden Offenbarung in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von in einer beispielhaften Ausführungsform beschriebenen Elementen gemacht werden können, ohne den Schutzbereich der angefügten Ansprüche zu verlassen. Außerdem können nach den hier beschriebenen Prinzipien auch mehrere Module bzw. mehrere Produkte miteinander verbunden werden, um weitere Funktionen zu erhalten.

### Bezugszeichenliste

- 1: Fahrzeug
- 2: Scheinwerfervorrichtung
- 3: erster Projektionsbereich
- 4: zweiter Projektionsbereich
- 5: Projektionsfeld
- 6: Versetzung
- 7: Projektionsbereich des Abblendlichts
- 8: Dunkelzone

- 20: erste Scheinwerfereinheit
- 21: zweite Scheinwerfereinheit
- 30: Steuereinheit

## Patentansprüche

1. Scheinwerfervorrichtung eines Fahrzeugs (1) zum Ausleuchten eines Abblendlichtprojektionsbereichs (7), eines Fernlichtprojektionsbereichs und eines HD-Projektionsfelds (5), wobei das HD- (High Definition) Projektionsfeld (5) aus einem ersten Projektionsbereich (3) und aus einem zweiten Projektionsbereich (4) zusammengesetzt ist, umfassend:
- eine erste steuerbare Scheinwerfereinheit (20) eines linken Fahrzeugscheinwerfers zum Ausleuchten des ersten Projektionsbereichs (3) mit veränderbarer räumlicher Beleuchtungsverteilung,
- eine zweite steuerbare Scheinwerfereinheit (21) eines rechten Fahrzeugscheinwerfers zum Ausleuchten des zweiten Projektionsbereichs (4) mit veränderbarer räumlicher Beleuchtungsverteilung,
- eine Steuereinheit (30) zum Ansteuern der ersten Scheinwerfereinheit (20) und der zweiten Scheinwerfereinheit (21),
**dadurch gekennzeichnet, dass** die Steuereinheit (30) konfiguriert ist, die erste Scheinwerfereinheit (20) und die zweite Scheinwerfereinheit (21) derart anzusteuern, dass das HD-Projektionsfeld (5) innerhalb des Abblendlichtprojektionsbereichs (7) auf einer Fahrbahn innerhalb einer Fahrspur des Fahrzeugs (1) liegt, und dass durch eine lokale Abdunkelung des ersten Projektionsbereichs (3) und des zweiten Projektionsbereichs (4) eine Dunkelzone (8) in einem Grenzbereich zwischen dem ersten Projektionsbereich (3) und dem zweiten Projektionsbereich (4) erzeugt werden kann, die an einem dem Fahrzeug (1) naheliegenden Rand des HD-Projektionsfeldes (5) ausgebildet ist und sich über die beiden Projektionsbereiche (3, 4) erstreckt.

2. Scheinwerfervorrichtung nach Anspruch 1, wobei die Steuereinheit (30) konfiguriert ist, die erste Scheinwerfereinheit (20) und die zweite Scheinwerfereinheit (21) derart anzusteuern, dass sich die wenigstens eine Dunkelzone (8) zum Rand des HD-Projektionsfeldes hin aufweitet.

3. Scheinwerfervorrichtung nach einem der vorherigen Ansprüche, wobei die Steuereinheit (30) konfiguriert ist, die erste Scheinwerfereinheit (20) und die zweite Scheinwerfereinheit (21) derart anzusteuern, dass sich die wenigstens eine Dunkelzone (8) auf einen Projektionsraumwinkel von weniger als 1°, insbesondere weniger als 0,3° eingeschränkt wird.

4. Scheinwerfervorrichtung nach einem der vorherigen Ansprüche, wobei die Steuereinheit (30) konfiguriert ist, die erste Scheinwerfereinheit (20) und die zweite Scheinwerfereinheit (21) derart anzusteuern, dass die wenigstens eine Dunkelzone (8) von einer entlang der Fahrtrichtung gerichteten Mittellinie seitlich versetzt wird.

5. Scheinwerfervorrichtung nach einem der der vorherigen Ansprüche, wobei die Steuereinheit (30) konfiguriert ist, die erste Scheinwerfereinheit (20) und die zweite Scheinwerfereinheit (21) derart anzusteuern, dass die wenigstens eine Dunkelzone (8) unscharfe Grenzen aufweist.

6. Scheinwerfervorrichtung nach einem der vorherigen Ansprüche, wobei die Steuereinheit (30) dazu konfiguriert ist, die erste Scheinwerfereinheit (20) und die zweite Scheinwerfereinheit (21) derart anzusteuern, dass die wenigstens eine Dunkelzone (8) an Veränderungen in dem ersten Projektionsbereich (3) und/oder dem zweiten Projektionsbereich (4) dynamisch angepasst wird.

7. Scheinwerfervorrichtung nach einem der vorherigen Ansprüche, wobei die Steuereinheit (30) konfiguriert ist, die erste Scheinwerfereinheit (20) und die zweite Scheinwerfereinheit (21) derart anzusteuern, dass sich die wenigstens Dunkelzone (8) an Veränderungen in dem ersten Projektionsbereich (3) und/oder in dem zweiten Projektionsbereich (4) in Abhängigkeit von einer aktuellen Fahrzeuggeschwindigkeit und/oder von einem aktuellen Kurvenradius dynamisch anpasst.

8. Scheinwerfervorrichtung nach einem der vorherigen Ansprüche, wobei die erste Scheinwerfereinheit (20) und/oder die zweite Scheinwerfereinheit (21) als ein HD-(High Definition) Scheinwerfereinheit (bzw. Scheinwerfermodul) zum Erzeugen einer HD-Projektion ausgebildet ist.

9. Verfahren zum Ausleuchten eines aus einem ersten Projektionsbereich (3) und aus einem zweiten Projektionsbereich (4) zusammengesetzten HD- (High Definition) Projektionsfelds (5) mit einer Scheinwerfervorrichtung (2) eines Fahrzeugs (1), wobei die Scheinwerfervorrichtung (2) eine erste Scheinwerfereinheit (20) eines linken Fahrzeugscheinwerfers zum Ausleuchten eines ersten Projektionsbereichs (3) mit veränderbarer räumlicher Beleuchtungsverteilung und eine zweite Scheinwerfereinheit (21) eines rechten Fahrzeugscheinwerfers zum Ausleuchten eines zweiten Projektionsbereichs (4) mit veränderbarer räumlicher Beleuchtungsverteilung aufweist, wobei die erste Scheinwerfereinheit (20) angesteuert wird, den erste Projektionsbereich (3) auszuleuchten und wobei die zweite Scheinwerfereinheit (21) angesteuert wird, den zweiten Projektionsbereichs (4) auszuleuchten , **dadurch gekennzeichnet, dass** das HD-Projektionsfeld (5) innerhalb eines Abblendprojektionsbereichs (7) auf einer Fahrbahn innerhalb einer Fahrspur des Fahrzeugs (1) liegt, und wobei die erste Scheinwerfereinheit (20) und die zweite Scheinwerfereinheit (21) angesteuert wird, dass durch eine lokale Abdunkelung des ersten Projektionsbereichs (3) und des zweiten Projektionsbereichs (4) wenigstens eine Dunkelzone (8) in einem Grenzbereich zwischen dem ersten Projektionsbereich (3) und dem zweiten Projektionsbereich (4) erzeugt wird, die sich einem dem Fahrzeug (1) naheliegenden Rand des Projektionsfeldes (5) ausgebildet und sich über die beiden Projektionsbereiche (3, 4) erstreckt.

10. Verfahren nach Anspruch 9, wobei die wenigstens eine Dunkelzone (8) an Veränderungen in dem ersten Projektionsbereich (3) und/oder dem zweiten Projektionsbereich (4) dynamisch angepasst wird.

11. Fahrzeug, wobei das Fahrzeug (1) wenigstens eine Scheinwerfervorrichtung (2) nach einem der vorhergehenden Ansprüche 1 bis 8 im eingebauten Zustand aufweist.

## Claims

1. A headlamp apparatus of a vehicle (1) for illuminating a low beam projection area (7), a high beam projection area and an HD projection field (5), wherein said HD (High Definition) projection field (5) is composed of a first projection area (3) and a second projection area (4), comprising:
- a first controllable headlight unit (20) of a left vehicle headlight for illuminating the first projection region (3) with variable spatial illumination distribution,
- a second controllable headlight unit (21) of a right vehicle headlight for illuminating the second projection region (4) with variable spatial illumination distribution,
- a control unit (30) for controlling the first headlight unit (20) and the second headlight unit (21), **characterised in that** the control unit (30) is configured to control the first headlight unit (20) and the second headlight unit (21) in such a way that the high-definition projection field (5) within the low-beam projection region (7) on a roadway within a lane of the vehicle (1) is located, and that by means of a local darkening of the first projection region (3) and of the second projection region (4) a dark zone (8) in a boundary region between the first projection region (3) and the second projection region (4) can be produced, which is formed on an edge of the high-definition projection field (5) close to the vehicle (1) and extends over the two projection regions (3, 4).

2. A headlight apparatus according to claim 1, wherein the control unit (30) is configured to control the first headlight unit (20) and the second headlight unit (21) in such a way that the at least one dark zone (8) to the edge of the hd - projection field widens.

3. A headlight device according to any one of the preceding claims, wherein the control unit (30) is configured, the first headlight unit (20) and the second headlight unit (21) in such a way that the at least one dark zone (8) to a projection solid angle of less than 1°, in particular less than 0,3° is restricted.

4. A headlight device according to any one of the preceding claims, wherein the control unit (30) is configured, the first headlight unit (20) and the second headlight unit (21) in such a way that the at least one dark zone (8) from a along the direction of travel directed centre line is displaced laterally.

5. A headlight device according to any one of the preceding claims, wherein the control unit (30) is configured, the first headlight unit (20) and the second headlight unit (21) in such a way that the at least one dark zone (8) has blurred boundaries.

6. A headlight device according to one of the preceding claims, wherein the control unit (30) is configured to control the first headlight unit (20) and the second headlight unit (21) in such a way that the at least one dark zone (8) is dynamically matched to changes in the first projection region (3) and/or the second projection region (4).

7. A headlight device according to one of the preceding claims, wherein the control unit (30) is configured to control the first headlight unit (20) and the second headlight unit (21) in such a way that the at least dark zone (8) adapts dynamically to changes in the first projection region (3) and/or in the second projection region (4) as a function of a current vehicle speed and/or of a current curve radius.

8. A headlight device according to one of the preceding claims, wherein the first headlight unit (20) and/or the second headlight unit (21) is designed as an HD (high definition) headlight unit (or headlight module) for generating an HD projection.

9. A method for illuminating an HD (High Definition) projection field (5) composed of a first projection region (3) and a second projection region (4) with a headlight device (2) of a vehicle (1), wherein the headlight device (2) has a first headlight unit (20) of a left vehicle headlight for illuminating a first projection region (3) with variable spatial illumination distribution and a second headlight unit (21) of a right vehicle headlight for illuminating a second projection region (4) with variable spatial illumination distribution, wherein the first headlight unit (20) is driven to illuminate the first projection region (3) and wherein the second headlight unit (21) is driven to illuminate the second projection region (4), **characterised in that** The invention relates to an HD projection field (5) within a dipped projection area (7) on a roadway within a lane of the vehicle (1), and wherein the first headlight unit (20) and the second headlight unit (21) are controlled in such a way that a local darkening of the first projection area (3) and of the second projection area (4) produces at least one dark zone (8) in a boundary area between the first projection area (3) and the second projection area (4), said dark zone being formed on an edge of the projection field (5) close to the vehicle (1) and extending over the two projection areas (3, 4).

10. A method according to Claim 9, wherein the at least one dark zone (8) is dynamically adapted to changes in the first projection region (3) and/or the second projection region (4).

11. A vehicle, wherein the vehicle (1) at least one headlight device (2) according to any one of the preceding claims 1 to 8 in the installed state.

## Revendications

1. Dispositif de projecteur d'un véhicule (1) pour éclairer une zone de projection de faisceau de croisement (7), une zone de projection de faisceau de route et une zone de projection HD (5), dans lequel la zone de projection HD (haute définition) (5) est composée d'une première zone de projection (3) et d'une seconde zone de projection (4), comprenant :
- une première unité de projecteur commandable (20) d'un projecteur gauche de véhicule pour éclairer la première zone de projection (3) avec une répartition spatiale variable de l'éclairage,
- une deuxième unité de projecteur commandable (21) d'un projecteur droit de véhicule automobile pour éclairer la deuxième zone de projection (4) avec une répartition spatiale variable de l'éclairage,
- une unité de commande (30) pour commander la première unité de projecteur (20) et la seconde unité de projecteur (21),
**caractérisé en ce que** l'unité de commande (30) est configurée pour commander la première unité de projecteur (20) et la deuxième unité de projecteur (21) de telle sorte que le champ de projection haute définition (5) se trouve à l'intérieur de la zone de projection de feu de croisement (7) sur une voie de circulation à l'intérieur d'une voie de circulation du véhicule (1), et **en ce qu'** une zone d'obscurité (8) dans une zone limite entre la première zone de projection (3) et la deuxième zone de projection (4) peut être produite au niveau d'une voie de circulation du véhicule (1) le bord voisin du champ de projection haute définition (5) est formé et s'étend sur les deux zones de projection (3, 4).

2. Dispositif de phare selon la revendication 1, dans lequel ladite unité de commande (30) est configurée pour commander ladite première unité de phare (20) et ladite seconde unité de phare (21) de telle sorte que ladite au moins une zone d'obscurité (8) s'élargisse vers le bord dudit champ de projection HD.

3. Dispositif de phare selon l'une quelconque des revendications précédentes, dans lequel l'unité de commande (30) est configurée pour commander la première unité de phare (20) et la deuxième unité de phare (21) de telle sorte que la zone sombre (8) au nombre d'au moins une se limite à un angle de l'espace de projection inférieur à 1°, en particulier inférieur à 0,3°.

4. Dispositif de phare selon l'une quelconque des revendications précédentes, dans lequel l'unité de commande (30) est configurée pour commander la première unité de phare (20) et la seconde unité de phare (21) de telle sorte que la au moins une zone d'obscurité (8) soit décalée latéralement par rapport à une ligne centrale dirigée le long de la direction de déplacement.

5. Dispositif de phare selon l'une quelconque des revendications précédentes, dans lequel l'unité de commande (30) est configurée pour commander la première unité de phare (20) et la seconde unité de phare (21) de telle sorte que la au moins une zone d'obscurité (8) présente des limites floues.

6. Dispositif de phare selon l'une quelconque des revendications précédentes, dans lequel l'unité de commande (30) est configurée pour commander la première unité de phare (20) et la seconde unité de phare (21) de telle sorte que la au moins une zone d'obscurité (8) est adaptée dynamiquement aux changements dans la première zone de projection (3) et/ou la seconde zone de projection (4).

7. Dispositif de phare selon l'une quelconque des revendications précédentes, dans lequel l'unité de commande (30) est configurée pour commander la première unité de phare (20) et la deuxième unité de phare (21) de telle sorte que la zone d'obscurité (8) au moins au nombre de deux s'adapte dynamiquement aux changements dans la première zone de projection (3) et/ou dans la deuxième zone de projection (4) en fonction d'une vitesse actuelle du véhicule et/ou d'un rayon de courbure actuel.

8. Dispositif de phare selon l'une quelconque des revendications précédentes, dans lequel la première unité de phare (20) et/ou la deuxième unité de phare (21) est réalisée sous la forme d'une unité de phare HD (haute définition) (respectivement d'un module de phare) pour produire une projection HD.

9. Procédé pour éclairer un champ de projection haute définition (HD) (5) composé d'une première zone de projection (3) et d'une deuxième zone de projection (4) avec un dispositif de projecteur (2) d'un véhicule (1), le dispositif de projecteur (2) comprenant une première unité de projecteur (20) d'un projecteur gauche de véhicule pour éclairer une première zone de projection (3) à répartition spatiale d'éclairage variable et une deuxième unité de projecteur (21) d'un projecteur droit de véhicule pour éclairer une deuxième zone de projection (4) à répartition spatiale d'éclairage variable, la première unité de projecteur (20) est commandée pour éclairer la première zone de projection (3) et dans laquelle la deuxième unité de projecteur (21) est commandée pour éclairer la deuxième zone de projection (4), **caractérisée en ce que** le champ de projection HD (5) est situé à l'intérieur d'une zone de projection de croisement (7) sur une voie de circulation à l'intérieur d'une voie de circulation du véhicule (1), et dans laquelle la première unité de projecteur (20) et la deuxième unité de projecteur (21) sont commandées pour être éclairées par un assombrissement local de la première zone de projection (3) et de la deuxième zone de projection (4) une zone sombre (8) est créée dans une zone limite entre la première zone de projection (3) et la deuxième zone de projection (4), qui se forme sur un bord du champ de projection (5) proche du véhicule (1) et s'étend sur les deux zones de projection (3, 4).

10. Procédé selon la revendication 9, dans lequel ladite au moins une zone d'obscurité (8) est adaptée dynamiquement à des changements dans ladite première zone de projection (3) et/ou ladite seconde zone de projection (4).

11. Véhicule, dans lequel le véhicule (1) comprend au moins un dispositif de phare (2) selon l'une quelconque des revendications 1 à 8, lorsqu'il est monté.
